# EUROPÄISCHE PATENTSCHRIFT

(11) **EP 1 558 069 B1**
(45) Veröffentlichungstag und Bekanntmachung des Hinweises auf die Patenterteilung: **13.12.2006**
(21) Anmeldenummer: 03782088.3
(22) Anmeldetag: 27.10.2003
(51) Int. Cl.: A01D 34/68, F16D 63/00, F16D 65/14, F16D 67/02, F16D 69/02

(54) **SICHERHEITSKUPPLUNG FÜR EINEN RASENMÄHER**
SECURITY COUPLING FOR A LAWN MOWER
EMBRAYAGE DE SECURITE POUR TONDEUSE A GAZON

(30) Priorität: 27.10.2002 DE 10250035
(43) Veröffentlichungstag der Anmeldung: 03.08.2005
(73) Patentinhaber: Viking GmbH, 6336 Langkampfen-Kufstein (AT); Becker, Felix, 86911 Diessen/Ammersee (DE)
(72) Erfinder: BECKER, Felix, 86911 Diessen/Ammersee (DE)
(74) Vertreter: Müller, Thomas
(86) Internationale Anmeldenummer: PCT/DE2003/003569
(87) Internationale Veröffentlichungsnummer: WO 2004/039142

(56) Entgegenhaltungen:
- DE-A- 1 694 488
- DE-A- 19 950 622
- US-A- 2 182 386
- US-A- 3 540 862
- US-A- 4 416 107

## Beschreibung

Die Erfindung betrifft eine Sicherheitskupplung für einen Rasenmäher und insbesondere für einen Handrasenmäher.

Aus dem Stand der Technik sind motorbetriebene Rasenmäher mit einem Verbrennungs- oder Elektromotor bekannt, wobei ein horizontal über der Grasfläche rotierendes Messer das Gras mäht. Zur Verhinderung von Unfällen wurden Sicherheitsvorschriften entwickelt, wonach eine sogenannte Totmann-Kontrolleinrichtung vorgesehen sein muß. Diese Kontrolleinrichtung umfaßt eine Taste, die gedrückt werden muß, wenn sich das Messer dreht. Wird die Taste losgelassen, muß die Messerrotation innerhalb von 3 Sekunden gestoppt werden. Vor Erlaß dieser Vorschrift und auch nachher wurden zahlreiche Vorrichtungen bekannt, die eine Lösung dieser Sicherheitsanforderung anstrebten.

So wurde aus der US 4 290 512 ein Mechanismus, bestehend aus einer Kupplung und einer Bremse, bekannt, bei der die Kupplungsschuhe in Verbindung mit der Kupplungstrommel stehen, und ein Bremsband dazu benützt wird, um die Rotation des Messers zu stoppen, ohne den Lauf des Motors zu unterbrechen. Hierbei wird Wert darauf gelegt, daß ein hohes Drehmoment von der Kupplung übertragen werden kann, und daß der Mechanismus vor dem Eindringen fremder Substanzen geschützt ist, um die bremsenden Oberflächen rein zu halten.

Aus der US 4 416 107 wurde ein Kontrollmechanismus für das Messer eines Rasenmähers bekannt, bei dem ebenfalls ein Messerträger über durch Zentrifugalkraft an einer Kupplungstrommel anliegende Kupplungsschuhe mit einem Antriebsmedium, zum Beispiel einem Motor, in Kontakt steht. Hierbei werden Bremstrommelsegmente, die mit den Bremsschuhen verbunden sind, über ein Bremsband mit physischer Kraft in eine entkuppelte Stellung gebracht. Um die Kraft zu reduzieren, die für die AUS - Stellung der Bremse erforderlich ist, wird eine spezielle Hebelkonstruktion verwendet. Auch bei dieser Konstruktion wird besonders darauf geachtet, daß der Kupplung- und Bremsmechanismus vor Umwelteinflüssen geschützt ist. In diesem Zusammenhang stehen praktische Überlegungen bei der Fertigung und dem Einbau des Bremsbandes.

Aus der US 4 696 381 wurde eine Kupplung und ein Bremsapparat bekannt, bei denen als Neuerung neben federbelasteten Bremsschuhen und damit verbundenen Trommelsegmenten eine geteilte Bremstrommel zum Einsatz kommt. Das verwendete Bremsband hat einen Umfassungswinkel von etwa 270 Grad. Ein besonderes Ziel dieser Konstruktion ist, daß der Halt des Messers nach der Betätigung des Totmann - Schalters innerhalb von 3 Sekunden erfolgt, vgl. Spalte 4, Zeilen 18 - 58.

Weitere Sicherheitskupplungen dieser Bauart werden in den Dokumenten US 4,326,368 und US 4,669,590 beschrieben.

In der vom Anmelder selbst stammenden Anmeldung DE 198 48 624 A1 wird ebenfalls eine Sicherheitskupplung dieser Bauart beschrieben. Dabei bestand die Aufgabe darin, eine wesentlich kürzere Bremszeit als 3 Sekunden zu erreichen, da ein 3 Sekunden nachlaufendes Messer immer noch eine erhebliche Gefahrenquelle darstellt. Dem Fachmann ist klar, daß für kürzere Bremszeiten größerer Bremskräfte erforderlich sind. Die Erzeugung größerer Bremskräfte ist jedoch mit einer Erhöhung des technischen Aufwandes verbunden, wodurch die Kosten und das Gewicht der Konstruktion ansteigen, was jedoch unerwünscht ist. Um diesen Widerspruch zu lösen wurde versucht, die Bandbremse als selbsthemmende Schlingbandbremse auszubilden. Der Vorteil dieser Bremsenkonstruktion besteht darin, daß die Bremskraft vollständig aus der sich drehenden und abzubremsenden Masse entzogen wird. Ein weiterer Vorteil besteht darin, daß die Bremskraft selbsttätig auf die Bremsbacken übertragen wird, d. h. es sind keine zusätzlichen Bauelemente erforderlich. Diesen Vorteilen steht jedoch als Nachteil gegenüber, daß die selbsttätige Aufbringung der Bremskraft nicht gesteuert werden kann.

Bei einem herkömmlichen von Hand geführten Rasenmäher rotiert ein bis zu 70 cm langes Messer oder Mehrfachmesser und die dazugehörigen Bauteile der Messerhalterung mit ca. 3000 Umdrehungen pro Minute. Für einen Rasenmäher sind im Laufe seiner Lebensdauer ca. 10 000 Bremsungen vorgesehen, ohne daß das Bremsband reißen darf oder ein anderer Schaden eintritt, d. h. es muß auch noch ein Sicherheitsfaktor berücksichtigt werden, so daß eine solche Bremse ca. 20 000 Bremsungen ohne Beschädigung aushalten muß. In der DE 198 48 624 ist beschrieben, daß durch die Anwendung der Selbsthemmung Bremszeiten von 1/1000 Sekunde gemessen wurden. Es ist dem Fachmann klar, daß derartig kurze Bremszeiten nur durch extrem hohe Kräfte erzielbar sind. Diese Kräfte wirkten bei dieser selbsthemmenden Bandbremse ungesteuert auf die Bremsbacken und auf das Bremsband und dessen Einspannstelle, was zu einem sofortigen Zerreißen des Bandes führte. Bei Versuchen, daß Band dicker und/oder breiter auszubilden, erhöhte sich das Gewicht des Bandes. Außerdem wurde das Band steifer, so daß der Selbsthemmeffekt nicht mehr zuverlässig funktionierte. Durch die größere und stabilere Einspannstelle des dickeren und/oder breiteren Bandes erhöhten sich das Gewicht und die Abmaße der Konstruktion, was jedoch unerwünscht ist.

Durch weitere Versuche wurde auch ermittelt, daß bei der Materialauswahl für das Band und die Bremsbacken ein Mindestreibwert eingehalten werden muß, damit die Selbsthemmung zuverlässig und reproduzierbar eintritt. Auf Grund dieser Tatsache verliefen auch Versuche der Herabsetzung des Reibwertes durch den Einsatz von Schmierstoffen negativ, da diese den Reibwert stark senkten, so daß die Selbsthemmung nicht zuverlässig und reproduzierbar war. Die gleiche negative Wirkung trat auf, wenn das Band und die Bremsbacken eine Materialpaarung mit zu geringem Reibwert bildete.

Der Erfindung liegt somit die Aufgabe zugrunde, eine Sicherheitskupplung mit ausreichend schnell ansprechender Bremse gegenüber dem erreichten Stand der Technik insoweit zu verbessern, daß die Sicherheitskupplung eine deutlich kürzere Bremszeit als 3 Sekunden erreicht. Weiterhin soll die Bremse eine ausreichende Standzeit haben und weitgehend unempfindlich gegenüber Umwelteinflüssen sein. Außerdem soll das Gewicht der Konstruktion verringert und die Herstellungskosten gesenkt werden.

Diese Aufgabe wird durch eine Vorrichtung nach Anspruch 1 gelöst.

Bei der erfindungsgemäßen Konstruktion war vor allem das bisher nicht gelöste Problem zu lösen, daß einerseits nur durch den Einsatz einer selbsthemmenden Bandbremse es möglich ist, die erforderlichen hohen Bremskräfte zu erzeugen, wenn gleichzeitig der konstruktive Aufwand, die Baugröße, das Gewicht und auch die Kosten möglichst gering zu halten sind.

Andererseits führt aber das Prinzip der Selbsthemmung bei Bandbremsen dazu, daß sich das Bremsband auf Grund der physikalischen Gesetze der Reibung in Bruchteilen von Sekunden (1/1000 Sekunde) festzieht, wodurch im Band extrem hohe Zugkräfte entstehen, die sich auch nicht vermindern lassen, da das Massenträgheitsmomente der rotierenden Messereinheit vorgegeben ist und nicht beliebig verringert werden kann.

Andere aus dem Stand der Technik bekannte konventionelle Bremskonstruktionen, bei denen Bremsbacken oder Bremsbänder auf eine Bremstrommel oder eine Bremsscheibe gedrückt werden, schieden bei der Lösungssuche aus, da bei diesen Systemen die erforderlichen Bremskräfte von außen zugeführt werden müssen, d. h. daß dafür entweder eine adäquate manuelle Kraft aufzuwenden wäre oder es müßten komplizierte und teure Bremskraftverstärker eingesetzt werden, um die gewünschte Bremszeitverkürzung zu erreichen.

Bei umfangreichen Versuchen mit verschiedenen Materialpaarungen wurde ein Effekt entdeckt, der bei selbsthemmenden Bandbremsen nicht bekannt war: Normalerweise steigt die Zugkraft im Band bis zum Ende des Bremsvorganges stark an. Bei einigen Materialpaarungen konnte jedoch am Ende der Bremsung ein relatives Absinken der Zugkraft beobachtet werden. Dieser Effekt trat erstmalig auf, als für die Bremsbacken ein Öl getränkter Sinterstahl verwendet wurde. Dem Fachmann für Bremstechnik ist allgemein bekannt, daß die Anwesenheit von Öl im Bereich der Bremsflächen sehr unerwünscht ist. Im vorliegenden Fall wurde jedoch folgender Effekt festgestellt: Das Öl ist unter normaler, klimatisch bedingter Temperatur in dem Sintermetall gebunden, so daß kein Öl oder nur sehr geringe Ölmengen auf der Oberfläche vorhanden sind. Unter Verwendung eines Stahlbandes als Bremsband konnte zu Beginn der Bremsung daher ein ähnlich hoher Reibwert gemessen werden wie bei der Verwendung von Öl freien Sintermetall. Gegen Ende der Bremsung, wenn bei herkömmlichen Bandbremsen mit Selbsthemmung die Zugkraft extrem steil ansteigt, konnte jedoch bei der Erfindung eine Verminderung des Anstiegs und dann z. T. ein Absinken der Zugkraft festgestellt werden.

Dieser Effekt wäre in der konventionellen Bremstechnik völlig unerwünscht. Er ist im vorliegenden Fall jedoch erwünscht, da er als gegenläufiger Effekt gegenüber der selbsttätig stark ansteigenden Zugkraft des Bremsbandes eine kompensierende Wirkung ausübt. Durch Nutzung dieses Effektes wird also ein zu starker Anstieg der Zugkraft gegen Ende der Bremsung und somit ein Zerreißen vermieden.

Dieser Effekt wird nach Überlegungen der Erfinder durch einen Temperaturanstieg durch Reibung an den Bremsflächen ausgelöst. Die Temperaturerhöhung bewirkt, daß sich Öl im Grenzbereich der Oberfläche der Bremsfläche ausdehnt und freigesetzt wird. Dadurch wird kurzzeitig der Reibwert herabgesetzt. Dieser Vorgang ist selbstregulierend. Wenn nach dem Loslassen der Totmann-Taste die Reibung an der Bremse sehr schnell eintritt, entsteht auch ein großer Temperaturgradient, der eine schnelle Freisetzung einer vorbestimmten Ölmenge bewirkt. Wenn dagegen z. B. bei Vorhandensein von Wasser (Nässe das Grases) die Reibung langsamer ansteigt, wird zuerst durch die Reibung und die entstehende Temperaturerhöhung das Wasser verdampft. Die verbleibende kinetische Energie bewirkt dann das Freisetzen von Öl. Da jedoch durch das Verdampfen des Wassers bereits kinetische Energie umgesetzt und das rotierende Messer bereits etwas abgebremst wurde, ist eine geringere Temperaturerhöhung zu erwarten, so daß auch nicht so viel Öl freigesetzt wird. Insofern ist die Abbremszeit relativ unabhängig von Nässe, was ein positiver Nebeneffekt ist.

Gemäß der vorstehend beschriebenen technischen Lehre werden also zwei gegenläufige physikalische Effekte genutzt, um das unkontrollierte Ansteigen der Zugkräfte im Bremsband und somit ein Zerreißen zu verhindern. Gleichzeitig wird aber die systemimmanente sichere und kurze Ansprechzeit dieses Bremsentyps erhalten.

Es muß betont werden, daß es sich hierbei nicht um eine herkömmliche Schmierung handelt, wie sie von Gleitlagern bekannt und zu jeder Zeit erwünscht ist, sondern um ein gezieltes Vermindern des Reibwertes zu einem vorbestimmten Zeitabschnitt des Bremsvorganges durch Nutzung der ansteigenden Temperatur, die durch die Bremsreibung bewirkt wird und durch Nutzung der Eigenschaft eines temperaturabhängigen Reibwertes der Materialpaarung.

Unter Kenntnis dieser technischen Lehre wurde auch mit anderen Materialien experimentiert, wobei Materialpaarungen gefunden wurden, deren Reibwert ab einer vorbestimmten Temperatur auch ohne Anwesenheit von Öl ebenfalls sich signifikant verringert. Somit ist es erstmals möglich, eine sehr zuverlässige und leichte Sicherheitskupplung für Rasenmäher zu schaffen. Auch auf eine vor Umwelteinflüssen schützende Kapselung kann verzichtet werden. Dieses Merkmal stellt ebenfalls ein absolutes Novum dar, da alle Anordnungen des Standes der Technik darauf bedacht sind, Umwelteinflüsse jeglicher Art durch eine Kapselung von der Bremse und / oder der Kupplung fern zu halten. Die Unterseite eines Rasenmähers mit der erfindungsgemäßen Sicherheitskupplung kann daher auch problemlos mit einem starken Wasserstrahl und sogar mit einem Dampfstrahl gereinigt werden, ohne daß irgendwelche Schäden oder Folgeschäden entstehen.

Nach Anspruch 2 bestehen das Bremsband aus Federstahl und die Bremsbacken aus einem Sintermetall, das eine Öltränkung aufweist. Die Porengröße des Sintermaterials und die Viskosität des Öls sind so gewählt, daß das Öl nicht durch die während der Betriebsdrehzahl auftretenden Zentrifugalkräfte aus dem Sintermaterial ausgetrieben wird und daß das Öl bei einer durch Bremsreibung bedingten Erwärmung der Bremsflächen in geringsten Mengen austritt, um im Endstadium der Selbsthemmung den unzulässig weiteren Anstieg der Zugkraft am Bremsband zu verhindern.

Nach Anspruch 3 bestehen die Bremsbacken aus einem Sintermetall mit hoher Abriebfestigkeit und das Federstehlbremsband weist auf der Reibseite eine Schicht aus einer Aluminiumoxidkeramik auf, wobei die Aluminiumoxidkeramikschicht so ausgewählt wird, daß der erfindungsgemäße Effekt nach Anspruch 1 eintritt.

Nach Anspruch 4 bestehen die Bremsbacken aus einem mit Öl getränkten Sintermetall und das Federstehlbremsband weist eine Schicht aus einer Aluminiumoxidkeramik auf. Diese Materialpaarung hat eine gute Standzeit.

Nach Anspruch 5 sind in dem Sintermaterial Bereiche mit einer erhöhten Ölspeicherfähigkeit vorgesehen, die als Öldepot wirken. Da sich das Öl infolge der Kapillarkräfte immer gleichmäßig verteilt, ist auch nach häufigen Bremsen eine reproduzierbare und gleichbleibende Bremswirkung vorhanden. Die geometrische und räumliche Anordnung und die Anzahl der Materialabschnitte mit der Depowirkung bleibt dem Fachmann überlassen, wenn er in Abhängigkeit von der weitgehend vorgegebenen Geometrie der Bremsbacken die vorstehend beschriebene Depowirkung erreicht.

Nachfolgend wird die erfindungsgemäße Lösung unter Bezugnahme auf die beigefügten Zeichnungen näher beschrieben:

Es zeigt im einzelnen:
- Figur 1:: Eine äußere Seitenansicht einer Ausführungsform der erfindungsgemäßen Sicherheitskupplung.
- Figur 2:: Eine Schnittzeichnung der Konstruktion aus Fig. 1 in einer 90 Grad - Drehung.
- Figur 3:: Eine schräge Draufsicht von der Seite des Messers aus.
- Figur 4:: Eine schräge Draufsicht von der Seite des Abtriebriemens aus.
- Figur 5:: Eine Explosionszeichnung wichtiger Bestandteile dieser Sicherheitskupplung.
- Figur 6:: Eine Darstellung auftretender Zugkräfte am Bremsband der Erfindung im Vergleich zum Stand der Technik.

### Bezugszeichenliste

- 1.: Kupplungsflansch
- 2.: Bremsbandhebel
- 3.: Zugfeder für Bremsband
- 5.: Lager für Bremsbandhebel
- 6.: Lagerbefestigung
- 7.: Nabe und Aufnahme für Motorwelle
- 8.: Kupplungstrommel
- 9.: Bremsband
- 10.: Kupplungsbacken mit Kupplungsbelag
- 11.: Bremsbacken und zugleich Fliegewichte der Kupplung
- 12.: Druckfedern zur Vorspannung
- 13.: Messeraufnahme
- 13.: Lager
- 14.: Lagerbefestigung
- 15.: Messer
- 16.: Motorwelle
- 17.: Schraube für Motorwellenbefestigung
- 18.: Bremsbandbefestigung
- 19.: Keilriemen für Fahrantrieb
- 20.: Bowdenzug

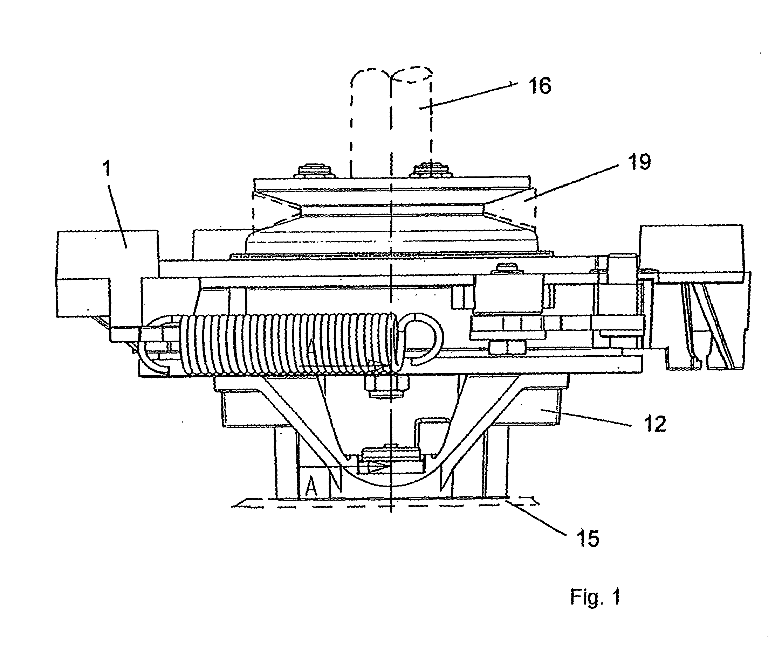

Die Figuren 1 bis 5 zeigen den generellen mechanischen Aufbau einer Sicherheitskupplung, in der die Erfindung eingesetzt wird.

In Fig. 1 ist mit 1 der Kupplungsflansch bezeichnet. Er besitzt im wesentlichen eine kreisähnliche Form und ist an der Unterseite eines Rasenmähers über drei, am Umfang verteilte, nicht gezeigte, Bolzen befestigt. Weiterhin ist mit Bezugszeichen 16 die Motorwelle und mit 19 der Keilriemen bezeichnet, der die Umdrehung der Motorwelle 16 über ein nicht näher bezeichnetes Getriebe an die Antriebsräder des Rasenmähers überträgt. Die Motorwelle 1 6 ist mit der Messeraufnahme 1 2 verbunden, die das Messer 15 trägt.

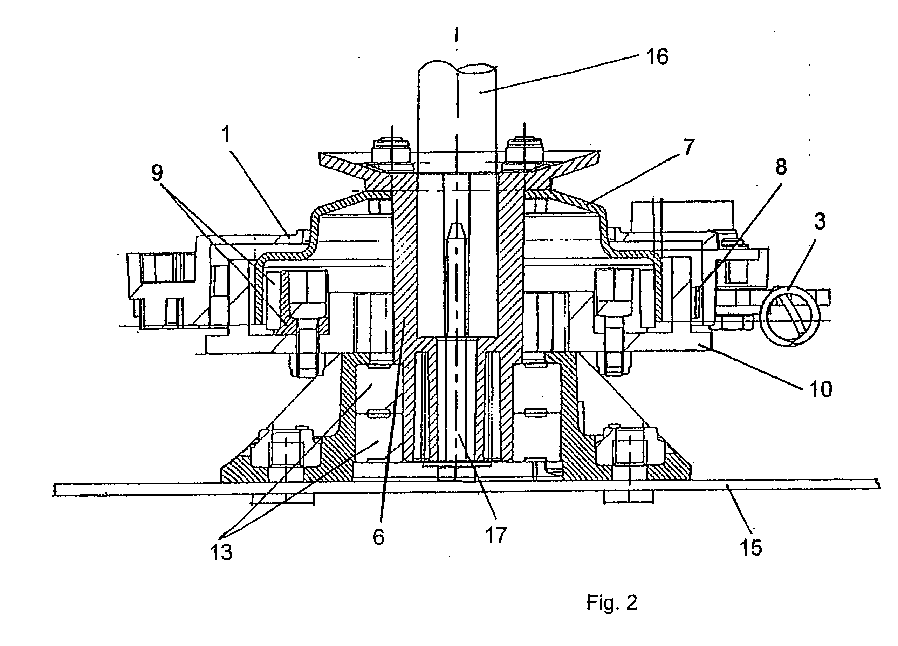

In Figur 2 ist ein Schnitt der Anordnung aus Figur 1 gezeigt, wobei, erkenntlich zum Beispiel an der Feder 3, eine Drehung um 90 Grad erfolgte. Die Zugfeder 3 für das Bremsband 8 liefert die Rückstellkraft, um dieses in Bremsposition zu bringen. Dies bedeutet, dass, wenn sich das Bremsband 8 an die Bremsbacken 10 anlegt, gleichzeitig die Kupplung gelöst wird und somit das Messer 15 stillsteht, die Motorwelle 16 aber separat weiter dreht.

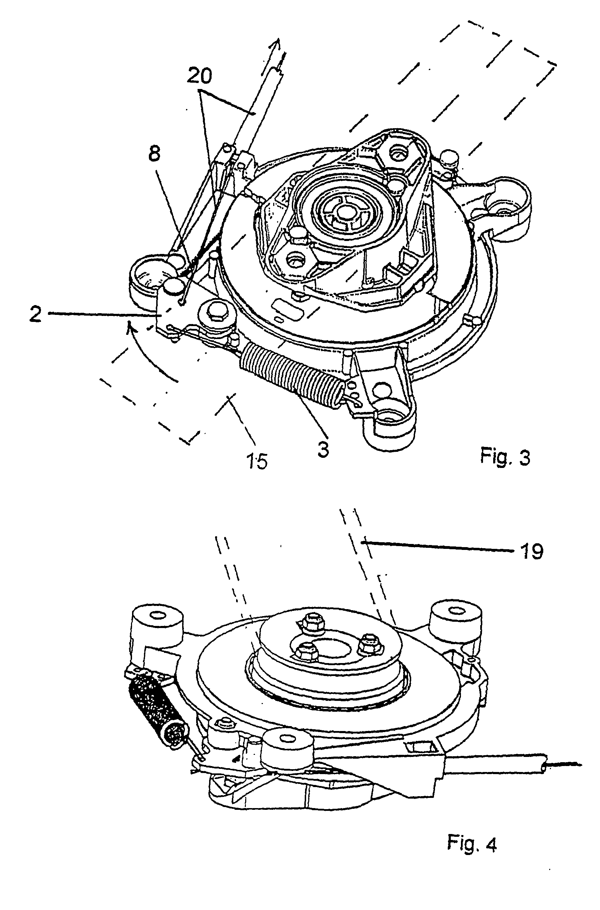

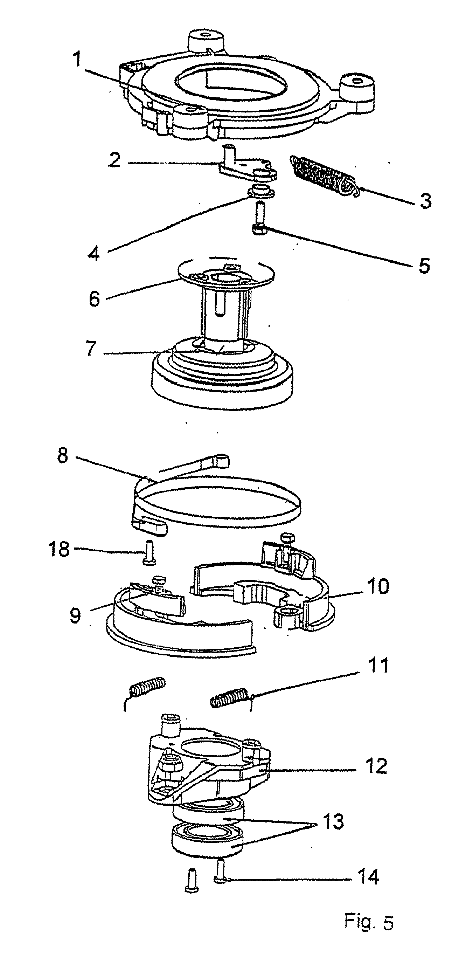

In Fig. 3 und 4 ist der Bowdenzug 20 gezeigt, der über den Bremsbandhebel 2 das Bremsband 8 löst. Wird der Bowdenzug 20 gezogen, löst sich das Bremsband 8 und gibt die Bremsbacken 10 frei. Die Bremsbacken 10 werden durch die Druckfedern 11 (s. Fig. 5) auswärts in die Kupplungsposition gedrängt, so daß das Messer 15 auch ohne Fliehkraftwirkung mitgenommen wird. Dieser Mechanismus gewährleistet ein schonendes Anfahren des Messers 15. Mit zunehmender Drehzahl werden die als Fliehkraftgewichte ausgebildeten Bremsbacken 10 auf Grund der zunehmenden Zentrifugalkraft verstärkt nach außen gedrängt, was gleichzeitig an der Kupplung einen erhöhten Kraftschluß bewirkt.

In Fig. 5 sind in einer Explosionsdarstellung die Einzelteile dargestellt, so daß daraus der besonders einfache und kostengünstige Aufbau der erfindungsgemäßen Sicherheitskupplung entnehmbar ist. Da das vorstehend beschriebene Kupplungs-Bremsen-Prinzip dem Fachmann an sich bekannt ist, werden dazu keine weiteren Ausführungen gemacht.

Das für Rasenmäher besonders kritische Abbremsen des Sichelmessers durch einen Stein oder ein ähnliches Hindernis hat ein nahezu sofortiges Auskuppeln des Messers bei weiterlaufendem Motor zur Folge, da das abrupte Ausbleiben der Fliehkraft die Haftung zwischen den Kupplungsbakken 9 und der Kupplungstrommel 7 aufhebt. In diesem Fall wirkt lediglich die durch die Druckfedern 11 eingestellte Federkraft auf die Kupplung, so daß das Messer 15 an dem Hindernis stehen bleibt und der Motor nicht beschädigt wird.

Im vorliegenden Beispiel einer ersten Ausführungsform der Erfindung bestehen die Bremsbacken 10 aus einem Sinterstahl, der in Vakuum mit Öl getränkt wurde. Das Öl wird durch die Kapillarkräfte in dem Sinterstahl gehalten. Bei der Arbeitsdrehzahl von 3000 Umdrehungen/Minute wird das Öl geringfügig nach außen gedrängt. Die Viskosität des Öles ist jedoch so gewählt, daß die Kapillarkräfte stärker wirken als die Zentrifugalkräfte, so daß kein Öl an den Bremsflächen austritt. Auf Grund der Oberflächenrauhigkeit des Sinterstahls entsteht eine sehr gute Anfangsbremswirkung. Wenn sich jedoch das Bremsband 8 selbsthemmend mit hoher Anpreßkraft um die Bremsbacken 10 schlingt und die Bremskraft extrem ansteigt, entsteht an den sich reibenden Flächen kurzzeitig eine erhöhte Erwärmung. Auf Grund des größeren Ausdehnungskoeffizienten des Öls und der sich durch die Erwärmung verringernden Viskosität treten geringste Mengen des Öles aus der von dem Bremsband abgedeckten Oberfläche der Bremsbacken 10 aus und verringern den Reibwert, so daß die Bremskraft nicht schlagartig ansteigt. Dadurch wird der Bremsvorgang bis zum Stillstand des Messers auf 0,8 Sekunden verlängert. Dem Fachmann ist klar, daß somit die Zugkräfte im Bremsband 8 und an seiner Befestigung wesentlich kleiner sind als wenn die Abbremsung innerhalb 1/1000 Sekunde erfolgen würde, wie in dem nächstliegenden Stand der Technik DE 198 48 624 beschrieben.

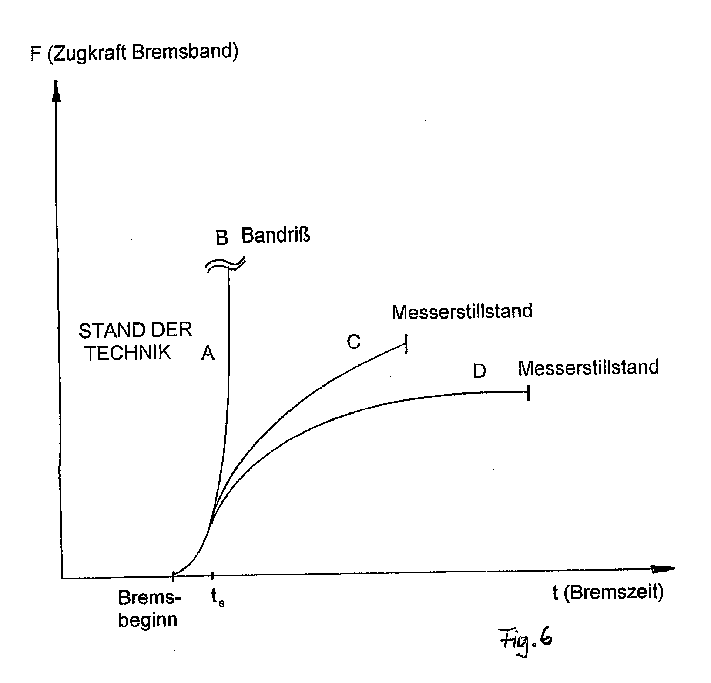

Diese Zusammenhänge sind in Fig. 6 qualitativ grafisch dargestellt, wobei die Kurve A den Kraft-Zeit-Verlauf einer selbsthemmenden Bandbremse aus dem Stand der Technik zeigt, bei der das Bremsband 8 auf Grund der hohen Zugbeanspruchung beim Eintreten der Selbsthemmung zum Zeitpunkt tₛ am Punkt B reißt. Die Kurve C zeigt den Kraft-Zeit-Verlauf der erfindungsgemäßen Bandbremse, wobei ab dem Zeitpunkt tₛ durch die zunehmende Erwärmung der Reibfläche der Bremsbacken das gebundene Öl austritt und den Reibungswert rechtzeitig vermindert, um ein schlagartigen Anstieg der Bremskraft und das Reißen des Bremsbandes zu vermeiden.

Die Kurve D zeigt den Kraft-Zeitverlauf einer zweiten Ausführungsform der Erfindung, bei der ein Federstahlbremsband mit einer 0,2 mm starken Schicht aus Aluminiumoxid beschichtet wurde. Die Technologie zur Herstellung derartiger keramischer Schichten ist dem Fachmann bekannt, so daß dazu keine weiteren Erläuterungen erforderlich sind. Es kommt lediglich darauf an, unter Kenntnis der erfindungsgemäßen Lehre eine Materialpaarung auszuwählen, die den Effekt der Absenkung des Reibwertes bei einer vorbestimmten Temperaturerhöhung aufweist. Im vorliegenden Fall wurde für die Bremsbacken ebenfalls ein Sinterstahl ausgewählt.

Wie aus der Kurve D zu entnehmen ist, verläuft die Abbremsung langsamer als bei der Kurve C. Es ist somit für den Fachmann unter Nutzung der erfindungsgemäßen Lehre möglich, durch einige Auswahlexperimente einen erwünschten Bremsverlauf zu realisieren, wobei auch der Durchmesser der Bremstrommel, die Dicke und die Breite des Bremsbandes und das Massenträgheitsmoment der Messereinheit fachmännisch zu berücksichtigen sind. Bei dieser Ausführungsform des Bremsbandes beträgt der Durchmesser der geteilten Bremstrommel 130 mm, die Bandbreite 8 mm und die Banddicke 0,8 mm zuzüglich der Schichtdicke.

## Patentansprüche

1. Sicherheitskupplung zum Auskuppeln und Abbremsen des Messers (15) eines von einem Motor angetriebenen Rasenmähers, wobei die Sicherheitskupplung eine vorgespannte Fliehkraftreibkupplung (7, 9) mit Drehzahl abhängiger Reibkraftverstärkung aufweist und die Fliehgewichte (10) der Fliehkraftreibkupplung (7, 9) gleichzeitig als Bremsbacken (10) einer Bandbremse **(8, 10)** ausgebildet sind, **dadurch gekennzeichnet, daß**
- für die Bandbremse (8, 10) nachfolgende konstruktive Bedingungen gelten: die Bandbremse ist selbsthemmend ausgelegt, so daß bei der Berührung des Bremsbandes (8) auf den Bremsbacken (10) sich das Bremsband (8) selbsttätig unter Nutzung der kinetischen Energie der sich drehenden Messerbaugruppe (15) zuzieht und somit an die Bremsbacken (10) preßt, wobei das Bremsband (8) einen Umschlingungswinkel von wenigstens 360 Grad aufweist,
und daß
- für das Bremsband (8) und für die Bremsbacken (10) eine Materialpaarung ausgewählt wird, die nachfolgender Bedingung genügt:
der Reibwert der Materialpaarung ist zu Beginn der Bremsung höher als am Ende der Bremsung, wobei die Absenkung des Reibwertes durch eine Temperaturerhöhung an den Reibflächen bewirkt wird, so daß die Zugkraft am Bremsband (8) einen vorbestimmten Wert nicht überschreitet.

2. Sicherheitskupplung nach Anspruch 1, **dadurch gekennzeichnet, daß** das Bremsband (8) aus Federstahl und die Bremsbacken (10) aus einem Sintermetall bestehen, das eine Öltränkung aufweist, wobei die Porengröße des Sintermaterials und die Viskosität des Öls so gewählt sind, daß
- das Öl nicht durch die während der Betriebsdrehzahl auftretenden Zentrifugalkräfte aus dem Sintermaterial ausgetrieben wird und daß
- das Öl bei einer durch Bremsreibung bedingten Erwärmung der Bremsflächen in geringsten Mengen austritt, um im Endstadium der Selbsthemmung den unzulässig weiteren Anstieg der Zugkraft am Bremsband (8) zu verhindern.

3. Sicherheitskupplung nach Anspruch 1, **dadurch gekennzeichnet, daß** das Bremsband (8) aus Federstahl und die Bremsbacken (10) aus einem Sintermetall mit hoher Abriebfestigkeit bestehen, wobei das Bremsband (8) auf der Reibseite eine Schicht aus einer Aluminiumoxidkeramik aufweist.

4. Sicherheitskupplung nach Anspruch 3, **dadurch gekennzeichnet, daß** die Bremsbacken (10) aus einem mit Öl getränktem Sintermetall bestehen.

5. Sicherheitskupplung nach Anspruch 2 und 4, **dadurch gekennzeichnet, daß** in dem Sintermaterial Bereiche mit einer erhöhten Ölaufnahmefähigkeit vorgesehen sind, die als Öldepot wirken.

## Claims

1. Safety clutch for disengaging and decelerating a knife **(15)** of a lawn-mower driven by a motor, wherein the safety clutch comprises a pre-stressed centrifugal-type friction clutch having a speed-dependent friction force booster **(7, 9)** and the fly weights **(10)** of the centrifugal-type friction clutch **(7, 9)** also serve as brake shoes **(10)** of a band brake **(8, 10),**
**characterized in that**
- the band brake is self-locking so that the brake strap **(8),** when touching the brake shoes **(10),** is caused to tighten and pressed onto them by the kinetic energy of the rotating knife unit **(15),** wherein the looping angle of brake strap **(8)** is 360 degrees at least,
and
- the material of the brake strap **(8)** and that of the brake shoes **(10)** are chosen so that the coefficient of friction thereof is higher at the beginning of deceleration than at the end of it, wherein the reduction of the coefficient of friction is caused by a rise in temperature at the friction area so that the tension acting onto the brake strap **(8)** does not exceed a predetermined value.

2. Safety clutch according to claim 1,
**characterized in that**
the brake strap **(8)** is made of spring steel and the brake shoes **(10)** are made of a sintered metal and impregnated with oil, wherein the size of voids of the sintered metal and the viscosity of oil are chosen so that
- the oil is not drawn out of the sintered metal by the centrifugal forces generated during the rotation at the operating speed, and
- a minor amount of oil escapes due to the heating of brake area, which is caused by the friction forces, in order to prevent a non-allowed increase of tension acting on the brake strap **(8)** in the final state of automatic locking.

3. Safety clutch according to claim 1,
**characterized in that**
the brake strap **(8)** is made of spring steel and the brake shoes **(10)** are made of a very wear-resistant sintered metal, wherein the brake strap **(8)** has on its friction side a layer of aluminium oxide ceramics.

4. Safety clutch according to claim 3,
**characterized in that**
the brake shoes **(10)** are made of a sintered metal impregnated with oil.

5. Safety clutch according to claims 2 and 4,
**characterized in that**
the sintered metal has regions which comprise an increased oil-absorbing capacity and serve as oil deposit.

## Revendications

1. Embrayage de sécurité pour désembrayer et freiner la lame (15) d'une tondeuse à gazon motorisée, l'embrayage de sécurité comportant un embrayage centrifuge à friction précontraint (7, 9) avec amplification de la force de friction en fonction de la vitesse de rotation et les masselottes centrifuges (10) de l'embrayage centrifuge à friction (7, 9) étant configurées en même temps comme des mâchoires de frein (10) d'un frein à bande (8, 10), **caractérisé en ce que**
- les conditions de construction suivantes sont applicables au frein à bande (8, 10) :
le frein à bande est autobloquant de sorte qu'en cas de contact entre la bande de frein (8) et les mâchoires de frein (10), la bande de frein (8) se serre automatiquement en utilisant l'énergie cinétique de l'ensemble de lames (15) en rotation et appuie donc sur les mâchoires de frein (10), la bande de frein (8) présentant un angle d'enroulement d'au moins 360 degrés,
et **en ce que**
- un appariement de matière est choisi pour la bande de frein (8) et pour les mâchoires de frein (10), qui répond aux conditions suivantes :
le coefficient de friction de l'appariement de matière est plus élevé au début du freinage qu'à la fin du freinage, la diminution du coefficient de friction étant provoquée par une élévation de la température des surfaces de friction de sorte que la force de traction sur la bande de frein (8) ne dépasse pas une valeur prédéterminée.

2. Embrayage de sécurité selon la revendication 1, **caractérisé en ce que** la bande de frein (8) est faite en acier à ressort et les mâchoires de frein (10) sont faites en un métal fritté qui présente une imprégnation d'huile, la taille des pores du matériau fritté et la viscosité de l'huile étant choisies de telle manière que
- l'huile n'est pas expulsée hors du matériau fritté par les forces centrifuges générées pendant la vitesse de régime et que
- l'huile sorte en très petites quantités lors d'un échauffement des surfaces de freinage provoqué par la friction du frein pour empêcher une augmentation ultérieure inadmissible de la force de traction sur la bande de frein (8) pendant le stade final du blocage automatique.

3. Embrayage de sécurité selon la revendication 1, **caractérisé en ce que** la bande de frein (8) est faite en acier à ressort et les mâchoires de frein (10) sont faites en un métal fritté qui présente une résistance à l'usure élevée, la bande de frein (8) comportant sur le côté de friction une couche en céramique d'oxyde d'aluminium.

4. Embrayage de sécurité selon la revendication 3, **caractérisé en ce que** les mâchoires de frein (10) sont faites en un métal fritté imprégné d'huile.

5. Embrayage de sécurité selon les revendications 2 et 4, **caractérisé en ce que** des zones avec une capacité d'absorption d'huile plus élevée, qui servent de dépôt d'huile, sont prévues dans le matériau fritté.
